# FASCICULE DE BREVET EUROPEEN

(11) **EP 1 989 426 B1**
(45) Date de publication et mention de la délivrance du brevet: **08.07.2009**
(21) Numéro de dépôt: 07731574.5
(22) Date de dépôt: 05.02.2007
(51) Int. Cl.: F02D 41/00, F02D 23/00

(54) **PROCEDE ET DISPOSITIF DE CONTROLE DE LA SURALIMENTATION EN AIR D'UN MOTEUR A COMBUSTION INTERNE**
VERFAHREN UND VORRICHTUNG ZUR LUFTAUFLADUNGSEGELUNG EINES VERBRENNUNGSMOTORS
METHOD AND DEVICE FOR CONTROLLING SUPERCHARGING AIR OF AN INTERNAL COMBUSTION ENGINE

(30) Priorité: 28.02.2006 FR 0601758
(43) Date de publication de la demande: 12.11.2008
(73) Titulaire: Renault SAS, 92100 Boulogne Billancourt (FR)
(72) Inventeur: BUIS, Emmanuel, F-92330 Sceaux (FR); GUINOIS, Arnaud, F-75013 Paris (FR)
(74) Mandataire: Guyon, Rodolphe C.
(86) Numéro de dépôt international: PCT/FR2007/050748
(87) Numéro de publication internationale: WO 2007/099241

(56) Documents cités:
- DE-A1- 10 054 843
- FR-A- 2 874 968
- FR-A1- 2 766 873
- US-A- 5 228 292
- US-A- 6 067 800

## Description

L'invention concerne la commande de moteurs à combustion interne de véhicules automobiles.

Plus particulièrement, l'invention se rapporte au contrôle de la suralimentation en air de tels moteurs.

Une application particulièrement intéressante de l'invention concerne le contrôle de la suralimentation en air d'un moteur de type Diesel suralimenté par un turbocompresseur.

La commande du moteur est la technique de réglage des performances d'un moteur à combustion interne par pilotage de l'ensemble de ses capteurs et actionneurs.

L'ensemble des lois de commandé et des paramétres de pilotage du moteur sont contenus dans un calculateur appelé UCE ou Unité de Commande Electronique.

Les moteurs suralimentés comprennent un turbocompresseur comprenant une turbine entraînée en rotation par les gaz d'échappement et un compresseur entraîné par la turbine et servant à augmenter la quantité d'air admise dans les cylindres.

A cet effet, la turbine est placée à la sortie du collecteur d'échappement tandis que le compresseur est monté sur le même axe que la turbine et est disposé en amont du collecteur d'admission.

La puissance fournie par les gaz d'échappement à la turbine peut être réglée en installant une soupape de décharge ou des ailettes qui influent sur le débit de gaz traversant la turbine ou la section de passage offerte à ces gaz, comme décrite dans le US 5,228,292

Un actionneur est utilisé pour piloter l'ouverture et la fermeture de la soupape ou des ailettes sous le contrôle d'un signal de commande délivré par l'unité de contrôle électronique afin d'asservir la pression de suralimentation présente dans le collecteur d'admission sur une consigne de pression calculée par l'UCE.

L'UCE recalcule sans cesse la consigne de pression de suralimentation, en fonction du régime du moteur et du débit de carburant, ou bien à partir d'une consigne de débit d'air et de richesse, et pilote la soupape ou les ailettes pour faire coïncider la pression régnant dans le collecteur d'admission et la consigne de pression.

Avec l'augmentation des performances des moteurs suralimentés, le niveau de pression de suralimentation augmente de sorte que les turbocompresseurs sont de plus en plus sollicités. Il est donc important de piloter le plus finement possible les turbocompresseurs pour éviter leur détérioration et améliorer le comportement du véhicule, lors des accélérations, et en particulier pour augmenter la dynamique du moteur, c'est-à-dire sa capacité à monter rapidement en régime.

Lorsque le conducteur souhaite disposer de la puissance maximale du moteur, il enfonce la pédale d'accélérateur. Cette position de la pédale est traduite par l'UCE en une consigne de débit de carburant. Cette consigne de débit est alors limitée en transitoire par un seuil qui est fonction du débit d'air frais et du régime du moteur, afin de limiter les émissions de particules (fumée noire) présentes dans les gaz d'échappement du moteur lors de son fonctionnement en régime transitoire.

Les normes de dépollution étant de plus en plus sévères, la quantité de particules rejetées par un moteur, en particulier Diesel, doit être de plus en plus faible. C'est la raison pour laquelle la ligne d'échappement du moteur est pourvue d'un filtre à particules qui permet de réduire la quantité de particules rejetées dans l'environnement. L'introduction d'un tel dispositif produit une augmentation de la contrepression d'échappement. Cette contrepression est d'autant plus importante que le filtre est chargé en particules. Elle se traduit, vis-à-vis du turbocompresseur, par une réduction du taux de détente, et par une réduction consécutive de la puissance fournie par les gaz d'échappement à la turbine et une diminution des performances du moteur. Pour obtenir le même niveau de performances, il est nécessaire de maintenir le taux de détente en augmentant la pression en amont de la turbine. Cette augmentation est généralement obtenue en fermant la soupape de décharge ou en agissant sur les ailettes.

La régulation de la pression régnant dans le collecteur d'admission du moteur autour de la valeur de consigne de pression est classiquement réalisée au moyen de régulateurs PID (Proportionnel, Intégral, Différentiel) d'après l'évolution de la différence entre la consigne de pression et la pression réelle mesurée.

Toutefois, cette stratégie de régulation est difficile à mettre en oeuvre dans la mesure où elle doit permettre d'asservir la pression régnant dans le collecteur sur la consigne de pression aussi bien en régime stabilisé qu'en régime transitoire.

On a déjà tenté, dans l'état de la technique, d'atteindre cet objectif.

On pourra à cet égard se référer au document US 2003/00 100 19 qui utilise deux régulateurs en cascade ou sur le document FR 2 829 530 qui propose de réguler la valeur de pression en amont de la turbine du turbocompresseur autour d'une valeur de consigne de pression correspondant à une valeur maximale de pression autorisée en amont de la turbine du turbocompresseur.

On pourra également se référer au document WO 2004/00 99 84 qui propose de contrôler la suralimentation en utilisant une consigne de position qui est fonction du régime du moteur ou au document WO 2004/027 238 qui propose de réguler de manière séquentielle soit la pression de suralimentation, soit la position d'un actionneur de réglage de la puissance des gaz d'échappement.

Mais les solutions proposées dans l'état de la technique ne permettent pas de mettre en oeuvre un asservissement de la pression de la suralimentation pour contrôler de manière précise la pression régnant dans le collecteur d'admission du moteur aussi bien en régime stabilisé qu'en régime transitoire, tout en limitant la pression en amont du turbocompresseur afin de protéger le moteur et le turbocompresseur.

Le but de l'invention est donc de pallier ces inconvénients et de fournir un procédé et un dispositif de contrôle de la suralimentation d'un moteur à combustion interne suralimenté permettant d'atteindre ce triple objectif, à savoir contrôle de la pression de suralimentation en régime transitoire, contrôle de la pression de suralimentation en régime stabilisé et limitation de la pression en amont de la turbine.

L'invention a donc pour objet, selon un premier aspect, un procédé de contrôle de la suralimentation en air d'un moteur à combustion interne d'un véhicule automobile équipé d'un turbocompresseur de suralimentation comprenant une turbine entraînée en rotation par les gaz d'échappement du moteur et un compresseur de suralimentation entraîné par la turbine, le procédé comprenant la régulation de la pression régnant dans un collecteur d'admission du moteur autour d'une valeur de consigne de pression de suralimentation.

Ce procédé comprend en outre une régulation de la pression en amont de la turbine pour limiter ladite pression en amont de la turbine, la régulation étant mise en oeuvre dès que la pression en amont de la turbine dépasse une valeur de seuil prédéterminée.

En outre, la régulation de la pression dans le collecteur d'admission comprend une régulation lente et une régulation rapide.

La régulation de la pression en amont de la turbine est désactivée dès que la pression régnant dans le collecteur est supérieure à la valeur de consigne de pression de suralimentation.

Selon une autre caractéristique de l'invention, la régulation lente comprend une phase d'élaboration d'une consigne de pression de suralimentation et une régulation de la pression de collecteur autour de la valeur de consigne.

Par exemple, la valeur de consigne est extraite d'une cartographie. Elle est élaborée en fonction du régime du moteur et du débit de carburant.

On peut en outre corriger la valeur de consigne en fonction de paramètres ambiants, tels que la température et la pression atmosphérique.

Dans un mode de mise en oeuvre, la régulation de la pression régnant dans le collecteur est mise en oeuvre au moyen d'une logique floue ou d'un régulateur de type PID.

On peut en outre avantageusement prépositionner un organe de réglage de la puissance des gaz d'échappement à une position prédéterminée extraite d'une cartographie à partir d'une valeur de paramètres de fonctionnement du moteur.

Ces paramètres de fonctionnement peuvent comprendre le régime du moteur et le débit de carburant.

Selon encore une autre caractéristique de l'invention, on prévoit un basculement du fonctionnement de la régulation lente en boucle ouverte lors du fonctionnement du moteur en régime transitoire.

Selon un second aspect, l'invention concerne un dispositif de contrôle de la suralimentation en air d'un moteur à combustion interne d'un véhicule automobile équipé d'un turbocompresseur de suralimentation pourvu d'une turbine entraînée par les gaz d'échappement du moteur et d'un compresseur de suralimentation entraîné par la turbine, le dispositif comprenant une unité de commande électronique comprenant des moyens pour réguler la pression régnant dans un collecteur d'admission du moteur autour d'une valeur de consigne de pression de suralimentation, caractérisé en ce que les moyens pour réguler la pression régnant dans le collecteur comportent une boucle de régulation lente et une boucle de régulation rapide, et en ce que l'unité de commande électronique comporte en outre des moyens de régulation adaptés pour limiter la valeur de la pression en amont de la turbine, ladite régulation étant mise en oeuvre dès que la pression en amont de la turbine est supérieure à une valeur de seuil.

Selon une autre caractéristique de ce dispositif, la boucle de régulation lente comprend des moyens pour élaborer une valeur de consigne de pression de suralimentation à partir de paramètres de fonctionnement du moteur et des moyens pour asservir la pression du collecteur autour de la valeur de seuil.

Par exemple, lesdits moyens pour asservir la pression du collecteur autour de la valeur de seuil comprennent un élément à logique floue ou un régulateur de type PID.

Selon encore une autre caractéristique du dispositif selon l'invention, on utilise une cartographie dans laquelle sont stockées des valeurs de prépositionnement d'un organe de réglage de la puissance des gaz d'échappement en fonction de paramètres de fonctionnement du moteur et des moyens pour prépositionner ledit organe à partir d'une valeur extraite de la cartographie.

Selon encore une autre caractéristique de l'invention, le dispositif comprend en outre des moyens pour commander sélectivement le fonctionnement de la boucle de régulation lente en boucle fermée ou en boucle ouverte en fonction du régime transitoire ou stabilisé du moteur.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 illustre, de manière schématique, la structure d'un moteur à combustion interne, de type Diesel, d'un moteur automobile pourvu d'un dispositif de contrôle de suralimentation conforme à l'invention :

- la figure 2 montre des courbes illustrant la mise en oeuvre de la régulation de la pression régnant dans le collecteur d'admission du moteur et de la pression en amont de la turbine, en fonction des valeurs mesurées ou estimées des pressions en amont de la turbine et dans le collecteur d'admission ;
- la figure 3 est un schéma synoptique illustrant l'architecture de la boucle lente du régulateur de la pression du collecteur d'admission ;
- la figure 4 est un schéma synoptique illustrant l'architecture générale du dispositif de contrôle de suralimentation selon l'invention; et
- la figure 5 est un schéma synoptique d'un régulateur à logique floue incorporé dans le régulateur de pression de suralimentation selon l'invention.

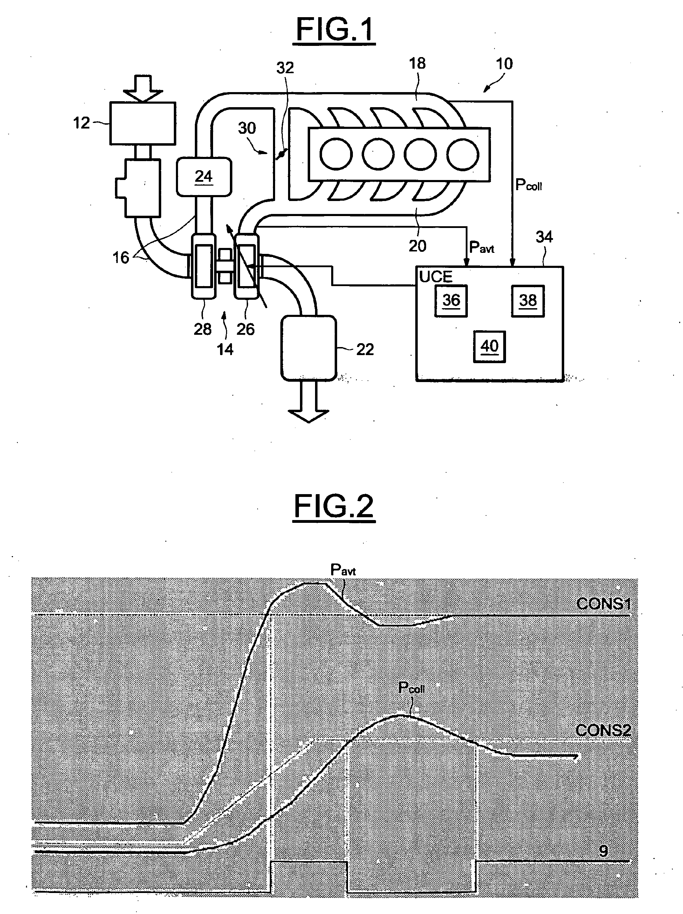

Sur la figure 1, on a représenté, de manière schématique, la structure générale d'un moteur 10 à combustion interne d'un véhicule automobile, de type Diesel, ainsi que ses collecteurs d'admission d'air frais et d'échappement.

Comme on le voit sur cette figure, le circuit d'admission d'air frais dans le moteur 10 comporte essentiellement un filtre à air 12 alimentant, par l'intermédiaire d'un turbocompresseur 14 et de conduites 16 appropriées, le collecteur d'admission 18 du moteur 10.

En ce qui concerne le collecteur d'échappement 20, celui-ci récupère les gaz d'échappement issus de la combustion et évacue ces derniers vers l'exterieur, par l'intermédiaire du turbocompresseur 14 et d'un filtre à particules 22 destiné à réduire la quantité de particules, notamment de suies, rejetées dans l'environnement.

Un échangeur thermique 24 optionnel équipant la conduite 16 d'alimentation du collecteur d'admission 18 en air frais, est disposé en relation d'échange thermique avec les gaz d'échappement, de manière à récupérer une partie des calories véhiculées par ces derniers.

Le turbocompresseur comporte essentiellement une turbine 26 entraînée par les gaz d'échappement et un compresseur 28 monté sur le même axe que la turbine et assurant une compression de l'air distribué par le filtre à air 12, dans le but d'augmenter la quantité d'air admise dans les cylindres du moteur.

Par ailleurs, le moteur 10 est en outre associé à un circuit 30, de recirculation des gaz d'échappement, servant à réinjecter une partie de ces gaz dans le collecteur d'admission 18 de manière à, en particulier, limiter la quantité d'oxyde de d'azote produit tout en évitant la formation de fumée dans les gaz d'échappement.

Ce circuit 30 comporte essentiellement une électrovanne 32 qui permet de contrôler le débit de gaz d'échappement recirculés.

Par ailleurs, une unité de commande électronique UCE. désignée par la référence numérique 34, récupère des signaux P_{coll} et Pavt de mesure de la pression régnant respectivement dans le collecteur d'admission et en amont de la turbine 26 du turbocompresseur, délivrés par des capteurs de mesure appropriés prévus à cet effet (non représentés). Elle agit sur un organe de réglage de la puissance des gaz d'échappement, par exemple une soupape de décharge ou sur les ailettes de la turbine 26 de manière à réguler la valeur de la pression régnant dans le collecteur d'admission 18 et en amont de la turbine 26 du turbocompresseur 14 autour de valeurs de consigne respectives.

L'unité UCE assure également le contrôle de fonctionnement du moteur, de manière connue en soi. Elle agit en particulier sur l'électrovanne 32 pour régler la quantité de gaz recirculés et règle le point de fonctionnement du moteur.

La présente demande de brevet ne concerne essentiellement que la régulation de la pression de suralimentation. Aussi, la description suivante de l'unité UCE ne se rapportera directement qu'aux moyens essentiels permettant de mettre en oeuvre cette régulation.

Comme on le voit sur la figure 1, l'unité de commande électronique UCE 34 comporte essentiellement des moyens de régulation permettant de réguler la pression de suralimentation, c'est-à-dire la pression dans le collecteur d'admission 18 autour d'une valeur de seuil.

Ces moyens de régulation comportent essentiellement un premier étage de régulation 36 et un deuxième étage de régulation 38 fonctionnant conjointement pour réguler la pression de suralimentation.

Elle est en outre pourvue d'un troisième étage 40 assurant une limitation de la pression Pavt en amont de la turbine.

En se référant à la figure 2, la limitation de la pression régnant en amont de la turbine, assurée par le troisième étage de régulation 40, est active uniquement lorsque la pression Pavt en amont de la turbine est supérieure à une première valeur de seuil CONS 1. Dans ce cas, la régulation de la pression de suralimentation mise en oeuvre par les premier et deuxième étages 36 et 38 de l'unité de commande UCE 34 est désactivée. Comme cela sera décrit en détail par la suite, ces premier et deuxième étages 36 et 38 sont alors positionnés en boucle ouverte, le turbocompresseur 14 étant alors piloté par le troisième étage 40 pour limiter la pression en amont de la turbine.

Au contraire, la régulation de pression en amont de la turbine mise en oeuvre par le troisième étage 40 est désactivée lorsque la pression régnant dans le collecteur P_{coll} est supérieure ou égale à une deuxième valeur de consigne CONS2.

Comme cela sera indiqué par la suite, ces modes de régulation sont mis en oeuvre en fonction d'un signal de commande S élaboré par l'UCE en fonction des valeurs mesurées Pₐᵥₜ et P_{coll} et des consignes CONS1 et CONS2.

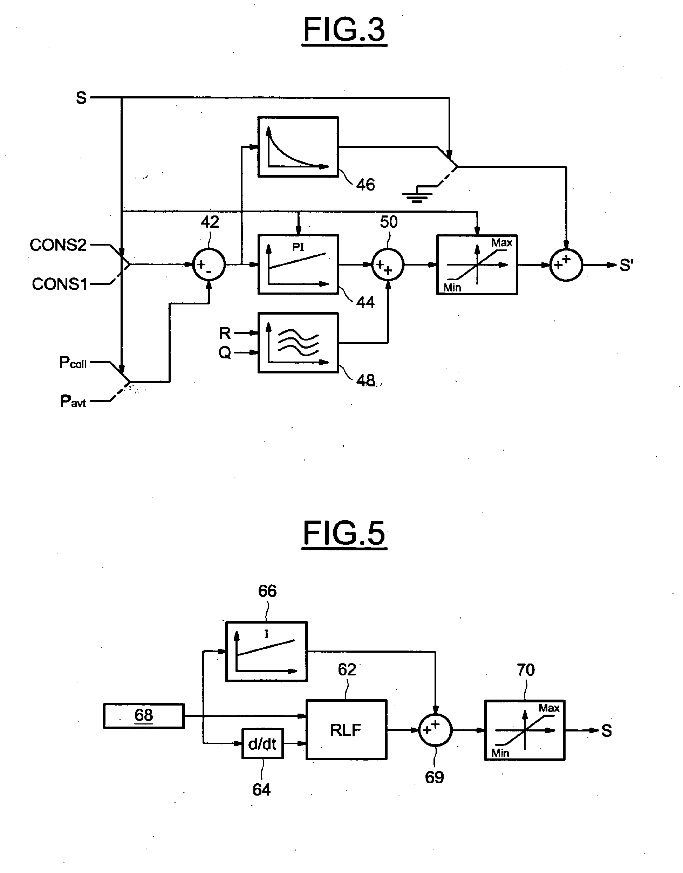

On va maintenant décrire en référence aux figures 3, 4 et 5, un mode de réalisation particulier d'un dispositif de régulation de pression de suralimentation conformément à l'invention.

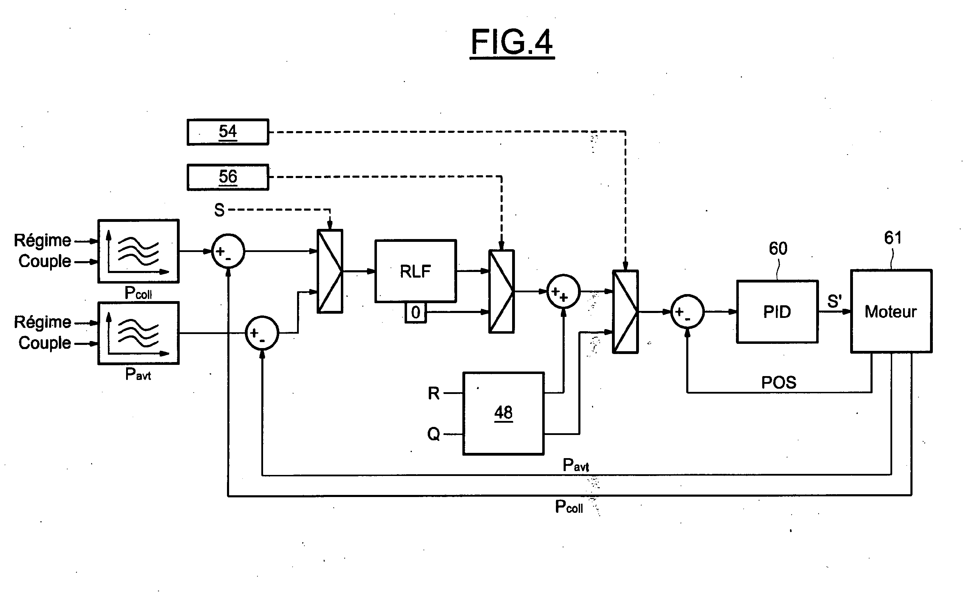

Sur la figure 3, on a représenté l'architecture générale du premier étage 36 de régulation, tandis que sur la figure 4, on a représenté un exemple de mise en oeuvre des premier, deuxième et troisième étages 36, 38 et 40. Dans le mode de réalisation illustré, le troisième étage de régulation 40 est incorporé au premier étage 36. On pourrait toutefois envisager de réaliser ces étages sous la forme de deux modules de régulation distincts.

Les premier et deuxième étages 36 et 38 constituent l'un une boucle de régulation lente et l'autre une boucle de régulation rapide.

En d'autres termes, le premier étage 36 de régulation est un régulateur relativement lent, élaboré à partir d'un régulateur de type PID ou à logique floue qui permet d'asservir la pression de suralimentation sur une valeur de consigne prédéterminée. Le deuxième étage de régulation 38 est, quant à lui, un régulateur relativement rapide de type PID ou un régulateur numérique de type RST qui permet de s'assurer qu'une position pour la turbine 26 commandée par le premier étage de régulation 36 est réellement atteinte. Par exemple, la fréquence de calcul des moyens de régulation mis en oeuvre pour assurer cette tâche est plus rapide que la fréquence de calcul utilisée par les moyens de régulation assurant le reste de la régulation de la pression de suralimentation.

En se référant à la figure 3, le régulateur à boucle lente permet d'élaborer un signal S' de commande destiné à la turbine 26 afin soit, d'assurer la régulation de la pression de suralimentation soit d'assurer une limitation de la pression en amont de la turbine en fonction du résultat de la comparaison entre d'une part, la mesure de la pression en amont de la turbine Pₐᵥₜ et la première valeur de consigne C1 de pression en amont de la turbine et. d'autre pat, entre la mesure de la pression de suralimentation P_{coll} et la deuxième valeur de consigne CONS2 de pression de collecteur ou, en d'autres termes, le signal de commande S de limitation de pression en amont du collecteur.

En d'autres termes, comme indiqué précédemment, lorsque la valeur de mesure Pₐᵥₜ de la pression en amont de la turbine est supérieure à la première valeur de seuil CONS1, la régulation de la pression de suralimentation est désactivée et la régulation de la pression en amont de la turbine est activée afin de limiter cette pression Pₐᵥₜ. Au contraire, lorsque la valeur de la pression du collecteur P_{coll} est supérieure ou égale à la deuxième valeur de seuil CONS2, la régulation de la pression en amont de la turbine est désactivée et la régulation de pression de suralimentation est activée.

Dans l'exemple de réalisation illustré à la figure 3, le régulateur est un régulateur de type PID. Comme cela sera indiqué en référence à la figure 4, on pourrait également utiliser un régulateur de type à logique floue.

En référence à la figure 3, le régulateur comprend un comparateur 42 qui assure la comparaison entre la consigne de pression en amont de la turbine CONS1 et la mesure de la pression en amont de la turbine Pₐᵥₜ ou une comparaison entre la consigne de pression du collecteur CONS2 et la mesure de la pression du collecteur P_{coll}, en fonction de la valeur du signal S de commande de limitation de pression.

Comme cela est connu en soi, la régulation est mise en oeuvre au moyen d'un intégrateur 44 et d'un dérivateur 46 afin d'élaborer un signal de commande S' destiné à la turbine 26 pour asservir la pression du collecteur sur la consigne CONS2 correspondante ou la pression en amont de la turbine sur la consigne CONS1 correspondante.

Par ailleurs, pour améliorer le temps de réponse de cette boucle de régulation, une valeur de prépositionnement de la soupape ou des ailettes de la turbine est ajoutée au régulateur PID. Cette valeur de prépositionnement est extraite d'une cartographie 48 en fonction du régime du moteur R ou du débit Q du carburant. On peut également ajouter des corrections en fonction de la pression atmosphérique, de la température de l'air d'admission....

Cette cartographie de prépositionnement de la turbine 26 est incorporée à l'UCE et permet d'obtenir une première valeur estimée des réglages du turbocompresseur en fonction du régime et du débit et faciliter ainsi le réglage. En outre, en corrigeant la valeur extraite de la cartographie en fonction notamment de la pression atmosphérique et de la température, il est possible d'affiner la valeur de prépositionnement de la turbine en fonction par exemple de l'altitude, ou de la température ambiante. On notera que cette valeur de prépositionnement de la turbine 26 permet de positionner le turbocompresseur dans un état initial valable pendant des régimes stables et qui permet donc d'aborder des régimes transitoires avec un bon réglage de départ.

La sortie du régulateur, et en particulier du dérivateur 44 et de la cartographie 48 sont sommés au moyen d'un sommateur 50 puis sont présentés en entrée d'un limiteur 52 afin de figer la partie intégrale lorsqu'une saturation est atteinte.

On notera que dans l'exemple de réalisation de la régulation de la pression de suralimentation qui vient d'être faite, on effectue une mesure de la pression de suralimentation P_{coll} que l'on asservit sur une valeur de consigne CONS2 correspondante. Il est également possible, en variante, de procéder à une estimation de la pression de suralimentation.

On va maintenant décrire en référence à la figure 4. l'architecture générale du dispositif de régulation de pression de suralimentation conforme à l'invention.

Dans le mode de réalisation décrit sur cette figure, la boucle lente et le régulateur de limitation de pression en amont de la turbine sont basés sur l'utilisation d'un régulateur à logique floue au lieu et place du régulateur PID utilisé dans le mode de réalisation décrit précédemment en référence à la figure 3.

Ce premier régulateur lent, qui intègre également une limitation de la pression en amont de la turbine, est par ailleurs similaire au régulateur de la figure 3.

Il permet ainsi, comme indiqué précédemment, soit d'asservir la pression de suralimentation ou la pression du collecteur sur la valeur de consigne CONS2 correspondante soit d'asservir la pression en amont de la turbine sur la valeur de consigne CONS1, en fonction de la valeur de la commande S (figure 2).

Par ailleurs, dans ce mode de réalisation, ce premier étage incorpore des moyens de détection de régime transitoire, référencés 54, de type classique, permettant à partir d'une mesure et d'un traitement de paramètres de fonctionnement du moteur, de détecter l'apparition de régimes transitoires. Dans ce cas, comme indiqué précédemment, la boucle lente est désactivée de sorte que la turbine 26 n'est pilotée qu'à partir de la boucle rapide. On conserve cependant la possibilité de positionner la turbine à une valeur de prépositionnement extraite d'une cartographie 48 en fonction du régime du moteur et du débit de carburant Q.

Ce régulateur incorpore également des moyens de gestion boucle ouverte/boucle fermée 56 associés aux moyens de détection de régimes transitoire 54 afin de piloter le fonctionnement de la régulation lente, soit en boucle ouverte, soit en boucle fermée. Le choix du fonctionnement boucle ouverte/boucle fermée pour la régulation de pression de suralimentation peut être fait en fonction de critères multiples. On peut, comme indiqué précédemment, basculer en boucle ouverte lorsque le moteur fonctionne en régime transitoire, on peut également utiliser des critères de charge du moteur....

Le deuxième étage 38 de régulation, qui constitue une boucle de régulation rapide, permet de s'assurer que la valeur de pression de suralimentation issue de la boucle de régulation est réellement atteinte. Cette boucle de régulation rapide est basée sur l'utilisation d'un comparateur 58 qui assure une comparaison entre la position attendue de l'actionneur de la turbine issu de la boucle lente avec une mesure POS correspondante de l'actionneur. Un régulateur 60 de type PID (Proportionnel. Intégral, Différentiel) permet d'asservir la position de l'actionneur sur la consigne issue de la boucle lente. Il délivre un signal S' de commande de l'actionneur de la turbine. Par exemple, le signal élaboré est un signal modulé en largeur d'impulsion. Il permet par exemple de commander la position des ailettes de la turbine au moyen d'un actionneur 61 de type pneumatique ou électrique.

En ce qui concerne le régulateur à logique floue RLF entrant dans la constitution de la boucle de régulation lente, on notera qu'un tel régulateur est constitué par un élément de type classique, à la portée d'un homme du métier. Il ne sera donc pas décrit en détail par la suite. On notera cependant, comme visible sur la figure 5, qu'il est basé sur l'utilisation d'un régulateur 62 qui est associé à un différenciateur 64 et à un intégrateur 66. Les signaux provenant d'un soustracteur 68, qui assurent le calcul entre un signal mesuré et un signal de consigne, sont présentés en entrée du régulateur 62. Le régulateur 62 est renseigné sur la différence de pression et sur sa dérivée temporelle. Si la fonction d'asservissement recherché possède un terme proportionnel dominant, on prévoira l'intégrateur 66 pour compléter l'asservissement. Cependant, cet intégrateur pourra être omis. Le signal de sortie du régulateur 62 et de l'intégrateur 66 sont alors ajoutés au moyen d'un additionneur 69 puis fournis à un régulateur de sortie 70, pour être délivrés en entrée de la boucle rapide.

On pourra toutefois se référer au document EP-A-1 365 132 qui décrit en détail l'architecture d'un régulateur à logique floue.

## Revendications

1. Procédé de contrôle de la suralimentation en air d'un moteur (10) à combustion interne d'un véhicule automobile équipé d'un turbocompresseur (14) de suralimentation comprenant une turbine (26) entraînée en rotation par les gaz d'échappement du moteur et un compresseur (28) de suralimentation entraîné par la turbine, comprenant la régulation de la pression régnant dans un collecteur d'admission (P_{coll}) du moteur autour d'une valeur de consigne de pression de suralimentation (CONS2), **caractérisé en ce que** la régulation de la pression du collecteur comprend une régulation lente et une régulation rapide, et **en ce qu'**il comprend en outre une régulation de la pression en amont de la turbine (Pₐᵥₜ) pour limiter la valeur de ladite pression, ladite régulation étant mise en oeuvre dès que la pression en amont de la turbine dépasse une valeur de seuil prédéterminée (CONS1).

2. Procédé selon la revendication 1, **caractérisé en ce que** la régulation de la pression en amont de la turbine est désactivée dès que la pression dans le collecteur est supérieure à la valeur de consigne de pression de suralimentation (CONS2).

3. Procédé selon l'une des revendications 1 et 2, **caractérisé en ce que** la régulation lente comprend une phase d'élaboration de consigne de pression de suralimentation et une régulation de la pression du collecteur autour de ladite valeur de consigne.

4. Procédé selon la revendication 3, **caractérisée en ce que** la valeur de consigne est extraite d'une cartographie.

5. Procédé selon la revendication 4, **caractérisé en ce que** la valeur de consigne est élaborée en fonction du régime du moteur et du débit de carburant.

6. Procédé selon la revendication 5, **caractérisé en ce que** l'on corrige la valeur de consigne en fonction de paramètres ambiants, tels que la température et la pression atmosphérique.

7. Procédé selon l'une quelconque des revendications 3 à 6. **caractérisé en ce que** la régulation de la pression dans le collecteur autour de la valeur de consigne est mise en oeuvre au moyen d'une logique floue ou d'un régulateur de type PID.

8. Procédé selon l'une quelconque des revendications 1 à 7. **caractérisé en ce que** l'on positionne un organe de réglage de la pression des gaz d'échappement à une position prédéterminée extraite d'une cartographie à partir d'une valeur de paramètres de fonctionnement du moteur.

9. Procédé selon la revendication 8. **caractérisé en ce que** les paramètres de fonctionnement comprennent le régime du moteur et la consommation de carburant.

10. Procédé selon l'une quelconque des revendications 1 à 9. **caractérisé en ce que** l'on bascule le fonctionnement la régulation lente en boucle ouverte lors du fonctionnement du moteur en régime transitoire.

11. Dispositif de contrôle de la suralimentation en air d'un moteur à combustion interne d'un véhicule automobile équipé d'un turbocompresseur de suralimentation pourvu d'une turbine entraînée par les gaz d'échappement du moteur et d'un compresseur de suralimentation entraîné par la turbine, le dispositif comprenant une unité de commande électronique (UCE) comprenant des moyens pour réguler la pression régnant dans un collecteur d'admission du moteur autour d'une valeur de consigne de pression de suralimentation, **caractérisé en ce que** l'unité de commande UCE comporte en outre des moyens (40) de régulation adaptés pour limiter la valeur de la pression en amont de la turbine (Pₐᵥₜ). ladite régulation étant mise en oeuvre dès que la pression en amont de la turbine (Pₐᵥₜ est supérieure à une valeur de seuil (CONS1), et **en ce que** la régulation de la pression régnant dans le collecteur comprend une boucle de régulation lente (36) et une boucle de régulation rapide (38).

12. Dispositif selon la revendication 11. **caractérisé en ce que** la boucle lente (36) comporte des moyens pour élaborer une valeur de consigne de pression de suralimentation (CONS2) à partir de paramètres de fonctionnement du moteur et des moyens pour asservir la pression du collecteur autour de la valeur de seuil.

13. Dispositif selon la revendication 12, **caractérisé en ce que** les moyens pour asservir la pression régnant dans le collecteur sur la valeur de consigne, comportent un élément à logique floue ou un régulateur PID.

14. Dispositif selon l'une quelconque des revendications 1 1 à 13, **caractérisé en ce qu'**il comporte une cartographie (48) dans laquelle sont stockées des valeurs de position d'un organe de régalage de la puissance des gaz d'échappement en fonction de paramètres de fonctionnement du moteur et des moyens pour prépositionner ledit organe à partir d'une valeur extraite de la cartographie.

15. Dispositif selon l'une quelconque des revendications 1 à à 14, **caractérisé en ce qu'**il 1 comporte des moyens pour commander sélectivement le fonctionnement de la boucle de régulation lente (36) en boucle fermée ou en boucle ouverte en fonction du régime transitoire ou stabilisé du moteur.

## Claims

1. Method for controlling the supercharging with air of an internal combustion engine (10) of a motor vehicle fitted with a supercharging turbocharger (14) comprising a turbine (26) rotated by the exhaust gases of the engine and a supercharging compressor (28) driven by the turbine, comprising the regulation of the pressure prevailing in an inlet manifold (P_{coll}) of the engine around a set point value of supercharging pressure (CONS2), **characterized in that** the regulation of the manifold pressure comprises a slow regulation and a fast regulation, and **in that** it also comprises a regulation of the pressure upstream of the turbine (Pₐᵥₜ) to limit the value of said pressure, said regulation being applied as soon as the pressure upstream of the turbine exceeds a predetermined threshold value (CONS1).

2. Method according to Claim 1, **characterized in that** the regulation of the pressure upstream of the turbine is deactivated as soon as the pressure in the manifold is greater than the supercharging pressure set point value (CONS2) .

3. Method according to either of Claims 1 and 2, **characterized in that** the slow regulation comprises a phase of generating the supercharging pressure set point and a regulation of the manifold pressure around said set point value.

4. Method according to Claim 3, **characterized in that** the set point value is extracted from a cartography element.

5. Method according to Claim 4, **characterized in that** the set point value is generated as a function of the engine speed and the fuel flow rate.

6. Method according to Claim 5, **characterized in that** the set point value is corrected as a function of ambient parameters, such as the temperature and atmospheric pressure.

7. Method according to any one of Claims 3 to 6, **characterized in that** the regulation of the pressure in the manifold around the set point value is applied by means of a fuzzy logic or a regulator of the PID type.

8. Method according to any one of Claims 1 to 7, **characterized in that** a member for adjusting the pressure of the exhaust gases is set at a predetermined position extracted from a cartography element based on a value of operating parameters of the engine.

9. Method according to Claim 8, **characterized in that** the operating parameters comprise the engine speed and the fuel consumption.

10. Method according to any one of Claims 1 to 9, **characterized in that** the operation is switched from slow regulation to open loop when the engine operates at transitional speed.

11. Device for controlling the supercharging with air of an internal combustion engine of a motor vehicle fitted with a supercharging turbocompressor provided with a turbine driven by the exhaust gases of the engine and a supercharging compressor driven by the turbine, the device comprising an electronic control unit (ECU) comprising means for regulating the pressure prevailing in an inlet manifold of the engine around a supercharging pressure set point value, **characterized in that** the control unit (ECU) also comprises regulation means (40) suitable for limiting the pressure value upstream of the turbine (Pₐᵥₜ) , said regulation being applied as soon as the pressure upstream of the turbine (Pₐᵥₜ) is greater than a threshold value (CONS1), and **in that** the regulation of the pressure prevailing in the manifold comprises a slow regulation loop (36) and a fast regulation loop (38) .

12. Device according to Claim 11, **characterized in that** the slow loop (36) comprises means for generating a supercharging pressure set point value (CONS2) based on operating parameters of the engine and means for slaving the manifold pressure around the threshold value.

13. Device according to Claim 12, **characterized in that** the means for slaving the pressure prevailing in the manifold to the set point value, comprise a fuzzy logic element or a PID regulator.

14. Device according to any one of Claims 11 to 13, **characterized in that** it comprises a cartography element (48) in which are stored position values of a member for regulating the power of the exhaust gases as a function of operating parameters of the engine and of the means for prepositioning said member based on a value extracted from the cartography element.

15. Device according to any one of Claims 11 to 14, **characterized in that** it comprises means for selectively commanding the operation from the slow regulation loop (36) to closed loop or to open loop as a function of the transitional or stabilized speed of the engine.

## Patentansprüche

1. Verfahren zur Kontrolle der Luftaufladung eines Verbrennungsmotors (10) eines Kraftfahrzeugs, der mit einem Turbolader (14) ausgestattet ist, welcher eine Turbine (26), die von den Abgasen des Motors in Drehung versetzt wird, und einen von der Turbine angetriebenen Auflader (28) enthält, das die Regelung des in einem Ansaugkrümmer des Motors herrschenden Drucks (P_{coll}) um einen Ladedruck-Sollwert (CONS2) herum enthält, **dadurch gekennzeichnet, dass** die Regelung des Drucks des Krümmers eine langsame Regelung und eine schnelle Regelung enthält, und dass es außerdem eine Regelung des Drucks vor der Turbine (Pₐᵥₜ) enthält, um den Wert des Drucks zu begrenzen, wobei die Regelung durchgeführt wird, sobald der Druck vor der Turbine einen vorbestimmten Schwellwert (CONS1) überschreitet.

2. Verfahren nach Anspruch 1, **dadurch gekennzeichnet, dass** die Regelung des Drucks vor der Turbine deaktiviert wird, sobald der Druck im Krümmer höher ist als der Ladedruck-Sollwert (CONS2).

3. Verfahren nach einem der Ansprüche 1 und 2,
**dadurch gekennzeichnet, dass** die langsame Regelung eine Phase der Erarbeitung eines Ladedruck-Sollwerts und eine Regelung des Drucks des Krümmers um den Sollwert herum enthält.

4. Verfahren nach Anspruch 3, **dadurch gekennzeichnet, dass** der Sollwert aus einer Kartographie entnommen wird.

5. Verfahren nach Anspruch 4, **dadurch gekennzeichnet, dass** der Sollwert in Abhängigkeit von der Drehzahl des Motors und vom Kraftstoffdurchsatz erarbeitet wird.

6. Verfahren nach Anspruch 5, **dadurch gekennzeichnet, dass** der Sollwert in Abhängigkeit von Umgebungsparametern wie Temperatur und Luftdruck korrigiert wird.

7. Verfahren nach einem der Ansprüche 3 bis 6,
**dadurch gekennzeichnet, dass** die Regelung des Drucks im Krümmer um den Sollwert herum mittels einer Fuzzy-Logik oder eines Reglers vom Typ PID durchgeführt wird.

8. Verfahren nach einem der Ansprüche 1 bis 7,
**dadurch gekennzeichnet, dass** ein Organ zur Einstellung des Drucks der Abgase auf einer vorbestimmten Position positioniert wird, die ausgehend von einem Wert von Betriebsparametern des Motors aus einer Kartographie entnommen wird.

9. Verfahren nach Anspruch 8, **dadurch gekennzeichnet, dass** die Betriebsparameter die Drehzahl des Motors und den Kraftstoffverbrauch enthalten.

10. Verfahren nach einem der Ansprüche 1 bis 9,
**dadurch gekennzeichnet, dass** der Betrieb der langsamen Regelung in offener Schleife beim Betrieb des Motors mit Übergangsdrehzahl umgeschaltet wird.

11. Vorrichtung zur Kontrolle der Luftaufladung eines Verbrennungsmotors eines Kraftfahrzeugs, der mit einem Turbolader ausgestattet ist, welcher mit einer von den Abgasen des Motors angetriebenen Turbine und mit einem von der Turbine angetriebenen Auflader versehen ist, wobei die Vorrichtung eine elektronische Steuereinheit (UCE) enthält, die Einrichtungen enthält, um den in einem Ansaugkrümmer des Motors herrschenden Druck um einen Ladedruck-Sollwert herum zu regeln, **dadurch gekennzeichnet, dass** die Steuereinheit UCE außerdem Regeleinrichtungen (40) aufweist, die geeignet sind, um den Wert des Drucks (Pₐᵥₜ) vor der Turbine zu begrenzen, wobei die Regelung durchgeführt wird, sobald der Druck (Pₐᵥₜ) vor der Turbine höher als ein Schwellwert (CONS1) ist, und dass die Regelung des im Krümmer herrschenden Drucks eine langsame Regelungsschleife (36) und eine schnelle Regelungsschleife (38) enthält.

12. Vorrichtung nach Anspruch 11, **dadurch gekennzeichnet, dass** die langsame Schleife (36) Einrichtungen zum Erarbeiten eines Ladedruck-Sollwerts (CONS2) ausgehend von Betriebsparametern des Motors und Einrichtungen aufweist, um den Druck des Krümmers um den Schwellwert herum zu regulieren.

13. Vorrichtung nach Anspruch 12, **dadurch gekennzeichnet, dass** die Einrichtungen, um den im Krümmer herrschenden Druck auf den Sollwert zu regulieren, ein Element mit Fuzzy-Logik oder einen PID-Regler enthalten.

14. Vorrichtung nach einem der Ansprüche 11 bis 13, **dadurch gekennzeichnet, dass** sie eine Kartographie (48), in der Positionswerte eines Organs zur Einstellung der Leistung der Abgase in Abhängigkeit von Betriebsparametern des Motors gespeichert werden, und Einrichtungen aufweist, um das Organ ausgehend von einem aus der Kartographie entnommenen Wert vorzupositionieren.

15. Vorrichtung nach einem der Ansprüche 11 bis 14, **dadurch gekennzeichnet, dass** sie Einrichtungen aufweist, um selektiv den Betrieb der langsamen Regelungsschleife (36) in geschlossener Schleife oder in offener Schleife in Abhängigkeit von der Übergangs- oder stabilisierten Drehzahl des Motors zu steuern.
